Europäisches Patentamt

**European Patent Office**

Office européen des brevets

(11) Veröffentlichungsnummer: **0 039 495**
**B1**

(12) **EUROPÄISCHE PATENTSCHRIFT**

(45) Veröffentlichungstag der Patentschrift:
**18.07.84**

(51) Int. Cl.³: **F 16 L 11/08,** F 16 L 11/11,
B 29 D 23/00

(21) Anmeldenummer: **81103296.0**

(22) Anmeldetag: **01.05.81**

(54) **Flexibler bewehrter Kunststoffschlauch, insbesondere Brauseschlauch, und Verfahren zu seiner Herstellung.**

(30) Priorität: **06.05.80 DE 3017326**
**14.05.80 DE 3018417**

(43) Veröffentlichungstag der Anmeldung:
**11.11.81 Patentblatt 81/45**

(45) Bekanntmachung des Hinweises auf die Patenterteilung:
**18.07.84 Patentblatt 84/29**

(84) Benannte Vertragsstaaten:
**AT BE CH DE FR IT LI NL SE**

(56) Entgegenhaltungen:
**DE - A - 2 261 126**
**DE - A - 2 722 928**
**DE - B - 1 228 468**
**FR - A - 2 013 627**
**FR - A - 2 356 869**
**US - A - 2 688 343**
**US - A - 3 058 493**

(73) Patentinhaber: **Hans Grohe GmbH & Co. KG,**
**Auestrasse 9, D-7622 Schiltach (DE)**

(72) Erfinder: **Alber Freiherr von Glanstätten Thassilo,**
**Mozarstrasse 6a, D-8090 Wasserburg/Inn (DE)**
Erfinder: **Stahl, Eugen Helmut, Königsheimer Strasse 12,**
**D-7205 Böttingen (DE)**

(74) Vertreter: **Patentanwälte Ruff und Beier,**
**Neckarstrasse 50, D-7000 Stuttgart 1 (DE)**

BUNDESDRUCKEREI BERLIN

## Beschreibung

Die Erfindung betrifft einen flexiblen bewehrten Kunststoffschlauch, insbesondere einen Brauseschlauch, mit einem extrudierten Innenschlauch aus thermoplastischem oder elastomerem Material, einem extrudierten Außenschlauch aus thermoplastischem oder elastomerem Material, der mindestens teilweise im Abstand vom Innenschlauch gehalten ist, und einer zur Bewehrung dienenden ummantelten Verstärkungswendel zwischen Innen- und Außenschlauch, deren Ummantelung mit dem Innenschlauch verbunden ist, sowie ein Verfahren zu seiner Herstellung.

Aus der DE-A-2 261 126 ist ein flexibler Kunststoffschlauch bekannt, bei dem um den Innenschlauch aus weichgemachtem Polyvinylchlorid eine Drahtwendel mit rundem Querschnitt aus Metall oder einem harten Kunststoff gelegt ist, ohne mit dem Innenschlauch verbunden zu sein. Zwischen die Wendelgänge dieser Drahtwendel ist ein dünnes Hart-PVC-Bändchen gewickelt, das wesentlich breiter ist als die Drahtstärke der Drahtwendel. Dieses wendelförmig verlaufende Hart-PVC-Bändchen ist sowohl mit dem Innenschlauch als auch mit dem Außenschlauch über seine gesamte Länge verbunden und hat die Aufgabe, zu verhindern, daß sich der Innenschlauch beim Biegen des Schlauches um kleine Radien nach innen wölbt und dabei den Durchflußquerschnitt vermindert. Der Schlauch ist jedoch verhältnismäßig steif, was darauf zurückzuführen ist, daß das Hart-PVC-Bändchen, das zusammen mit dem Innenschlauch und dem Außenschlauch einen relativ starken Verbundkörper darstellt, sich einer Biegung widersetzt. Bei der Biegung erfährt deshalb der über der Drahtwendel liegende Bereich des Außenschlauches eine erhebliche Stauchung und Auswulstung an der Schlauchseite mit geringerem Radius, was eine starke Materialbeanspruchung zur Folge hat.

Aus der DE-A-2 722 928 ist ein flexibler Kunststoffschlauch bekannt, bei dem ein flexibles Verstärkungsband aus relativ hartem Kunststoff wendelförmig um den Innenschlauch gewickelt und mit diesem und mit dem Außenschlauch fest verbunden ist und zwar mit dem Außenschlauch über radial abstehende umlaufende Verstärkungsrippen, die gleichzeitig den Abstand zwischen Außenschlauch und Innenschlauch bestimmen. Bei diesem flexiblen Schlauch ist der Zwischenraum zwischen den Gängen der Verstärkungswendel frei, wodurch an sich eine gute Durchbiegung des Schlauches möglich ist. Es hat sich jedoch gezeigt, daß die Flexibilität des Schlauches für den praktischen Gebrauch noch besser sein könnte. Auch haben sich Haftungsprobleme bei der Verbindung von Hartplastik mit dem weichgemachten Kunststoff der Schläuche ergeben.

In der DE-B-1 228 468 ist eine biegsame Rohrleitung beschrieben, bei der ein elastisches inneres Rohr mit der Ummantelung einer Verstärkungswendel verbunden ist. Die Verstärkungswendel besteht dabei aus einem Stahldraht, der mit einem elastomeren Material ummantelt ist. Über dieser Verstärkungswendel liegt ein äußeres Rohr, das an der Verstärkungswendel mit Spannung anliegt, aber nicht mit dieser verbunden ist, so daß beim Biegen des Rohres ein gegenseitiges Rutschen zwischen Außenrohr und Verstärkungswendel möglich ist. Diese biegsame Rohrleitung birgt jedoch die Gefahr in sich, daß größere Verschiebungen eintreten können.

Demgegenüber liegt der Erfindung die Aufgabe zugrunde, einen Druckschlauch, insbesondere für die Verwendung als Brauseschlauch, zu schaffen, dessen Flexibilität im Vergleich zu den bekannten verstärkten Kunststoffschläuchen verbessert ist und der auch bei langem Gebrauch keine Verschleißerscheinungen zeigt.

Die Erfindung ist dadurch gekennzeichnet, daß die Ummantelung als an der Verstärkungswendel nicht haftender Schlauch ausgebildet ist, in dem die Verstärkungswendel verschieblich liegt, und die Ummantelung auch mit dem Außenschlauch verbunden ist.

Die Ummantelung der Verstärkungswendel besteht vorzugsweise aus mindestens teilweise elastisch verformbaren Material, insbesondere Weich-Polyvinylchlorid. Zur Verbindung ist die Ummantelung zweckmäßigerweise mit dem Innen- und Außenschlauch verschweißt oder verklebt. Die Ummantelung der relativ harten Verstärkungswendel bringt Vorteile sowohl in bezug auf die Herstellung als auch in bezug auf den Gebrauch des Schlauches. Auf die Wendel kann beispielsweise vor ihrer Ummantelung eine metallisierte Folie oder eine Metallfolie aufgelegt werden, wodurch bei durchsichtiger Ummantelung das gewünschte Aussehen eines Brauseschlauches mit einem Metallmantel erreicht werden kann. Durch die Ummantelung mit dem Weichplastik ist diese Metallauflage vor unerwünschten Angriffen geschützt. Das Wesentliche der Ummantelung der Verstärkungswendel ist aber darin zu sehen, daß durch die Ummantelung eine gute Haftverbindung mit dem Außen- und Innenschlauch erzielt wird, die wesentlich besser ist als wenn man versucht, die Verstärkungswendel, die beispielsweise aus Polyamid, Polyester, Polyurethan und insbesondere aus Hart-PVC oder Polypropylen bestehen kann, direkt mit dem Außen- und Innenschlauch zu verbinden. Darüber hinaus kann sich die Ummantelung, die an der Verstärkungswendel nicht haftet, bei Dehnungen des Außen- und/oder Innenschlauches elastisch mitverformen, ohne daß sie dabei von der harten Verstärkungswendel gehindert wird. Dadurch wird die Flexibilität des Schlauches wesentlich erhöht. Gleichzeitig wurde beim erfindungsgemäßen Schlauch, dadurch daß die ummantelte Verstärkungswendel auch das Verbindungselement zwischen Innen- und Außenschlauch darstellt, erreicht, daß der Zwischenraum zwischen den Gängen der Verstärkungswendel freibleiben kann, so daß er beim Biegen des Schlauches voll zum Zusammenschieben der Verstärkungswendel an der Biegungsinnenseite verfügbar ist. Andererseits kann dieser Zwischenraum beim erfindungsgemäßen Schlauch auch kleiner gehalten werden als die Breite der Verstärkungswendel, insbesondere etwa $1/3$ bis $2/3$ mal so breit, wodurch die Metallisierung der Wendel durch die kleineren Ganghöhen stärker zum Ausdruck kommt, so daß der Schlauch optisch wie ein Metallschlauch aussieht.

Die Verstärkungswendel kann als flacher Materialstreifen mit im wesentlichen rechteckigem bis ovalem Querschnitt ausgebildet werden, wobei die Flachseiten zum Außen- bzw. Innenschlauch weisen. Da zwischen der Verstärkungswendel und ihrer Ummantelung keine Haftverbindung besteht, ist auch eine relative Verschiebbarkeit in Längsrichtung der Wendel möglich, wodurch auch Spannungen bei Torsionsbewegungen des Schlauches abgebaut werden können und ein Abreißen an der Verbindung der Ummantelung mit dem Außen- und Innenschlauch vermieden wird.

Die Flexibilität des erfindungsgemäßen Schlauches kann bei einer Ausführungsform noch dadurch erhöht werden, daß der radiale Abstand zwischen Innen- und Außenschlauch im Bereich zwischen den Gängen der Verstärkungswendel durch Verjüngung des Außenschlauches und/oder Ausbauchung des Innenschlauches kleiner ist als im Bereich der Verstärkungswendel. Eine solche relative Annäherung von Außen- und Innenschlauch kann auf verschiedene Weise erreicht werden, z. B. durch Anlegen eines Druckes beim Umspritzen des verstärkten Innenschlauches mit der Masse des Außenschlauches, wobei der Grad der relativen Annäherung durch die Höhe des Druckes reguliert werden kann. Die relative Annäherung zwischen Außenschlauch und Innenschlauch kann sogar so weit gehen, daß sich die beiden Schläuche im Zwischenraum zwischen den Gängen der Verstärkungswendel berühren, wo sie sogar bleibend miteinander verbunden sein können.

Der Innenschlauch des erfindungsgemäßen Schlauches kann aus Gummi, insbesondere aus heißwasserbeständigem Gummi bestehen. Dadurch wird einerseits die Funktionssicherheit des Schlauches erhöht, andererseits kann der Schlauch aufgrund der hohen Elastizität des Gummiinnenschlauches rückfedernd dehnbar ausgebildet werden. Auch die Flexibilität des Schlauches wird dadurch erhöht und gleichzeitig wird erreicht, daß der Schlauch beim Biegen um kleine Radien weniger stark beansprucht wird, weil die Biegung durch die Dehnbarkeit des Gummis an der Außenseite der Biegestelle erleichtert wird. Besteht der Innenschlauch aus Gummi, dann kann wegen seiner größeren Flexibilität die Ummantelung der Verstärkungswendel auch im wesentlichen flexibel oder an der Verstärkungswendel haftend ausgebildet sein.

Da sich Gummi mit einem weichen thermoplastischen Kunststoff, so z. B. weichgemachten PVC, weniger gut verbinden läßt als solche Kunststoffe untereinander, ist die Gummiaußenseite vorzugsweise mit einem Haftvermittler versehen, um so eine gute Verbindung mit der Ummantelung der Verstärkungswendel zu erzielen. Der Haftvermittler kann streifenförmig oder wendelförmig entsprechend dem Verlauf der Verstärkungswendel am Innenschlauch aufgetragen sein, ist in der Regel aber vollflächig vorgesehen. Als Haftvermittler kann mit Vorteil ein elastomerer Kleber, z. B. auf Polyurethanbasis, dienen. Es ist auch möglich, zusätzlich oder an Stelle eines Klebers den gesamten Gummi-Innenschlauch mit einer dünnen Schicht aus Weichplastik zu ummanteln, wobei hierzu vorzugsweise der gleiche Kunststoff verwendet wird, aus dem auch die Ummantelung der Verstärkungswendel besteht. Auf diese Weise kann eine sehr feste Verbindung zwischen der Ummantelung der Verstärkungswendel und dem Innenschlauch geschaffen werden.

Der erfindungsgemäße Schlauch ist weiterhin mit Vorteil in axialer Richtung durch im wesentlichen axial verlaufende Fäden verstärkt, die zwischen Innenschlauch und Verstärkungswendel angeordnet sind. Als Fäden eignen sich besonders flexible, aber nicht dehnbare multifile Fäden, die sich flach an den Innenschlauch anlegen. Sie können auch in Kunststoffbändchen, z. B. aus PVC, eingearbeitet oder mit diesem belegt sein. Besteht der Innenschlauch aus Gummi, dann sind die axialen Verstärkungsfäden vorzugsweise länger gehalten als der Innenschlauch in entspanntem Zustand.

Dadurch ist es möglich, den Schlauch bei einer Längsverstärkung längselastisch auszubilden, wobei jedoch die Längsdehnung durch die Länge der Fäden eindeutig begrenzt werden kann. Um die Dehnbarkeit zu gewährleisten, verlaufen die Versteifungsfäden auf dem Innenschlauch nicht völlig geradlinig, sondern in einer solchen Weise, daß sie noch gestreckt werden können. So können die Fäden mit Vorteil etwa zickzackförmig und/oder unter Ausbildung von schlaufenförmigen Noppen auf dem Innenschlauch angeordnet sein. Die Längselastizität des Schlauches, die im Bereich zwischen 5% und 100% liegen kann, wird so durch die Fäden vorzugsweise auf ca. 10 bis 20% begrenzt, was für die meisten Fälle ausreicht. Durch die Längselastizität des Schlauches ist es möglich, den Abstand zwischen den Gängen der Wendel auch kleiner als die Hälfte oder ein Drittel der Breite des Verstärkungsbandes zu halten, wobei trotzdem eine gute Flexibilität gewährleistet ist. Es ist sogar möglich, daß die einzelnen Gänge dicht an dicht liegen. In der Regel sind 6 bis 24 Verstärkungsfäden vorgesehen, vorzugsweise 8 bis 20.

Die Erfindung betrifft auch ein Verfahren zur Herstellung des erfindungsgemäßen Schlauches, bei dem der Innenschlauch mit einem monofilen, ggf. mit einer Metallisierung versehenen ummantelten Verstärkungsband wendelförmig umwickelt und die Ummantelung mit dem Innenschlauch verbunden wird und ein Außenschlauch über die gebildete Verstärkungswendel extrudiert wird. Das Verfahren ist dadurch gekennzeichnet, daß ein zur Herstellung des ummantelten Verstärkungsbandes biegbares Verstärkungsband aus Hartplastik mit einem weichen Kunststoff unter Vermeidung einer Haftverbindung durch Umspritzen so ummantelt wird, daß das Verstärkungsband in der Ummantelung verschieblich bleibt, und daß die Ummantelung der Verstärkungswendel auch mit dem Außenschlauch verbunden wird.

Als Material für das Umspritzen des Verstärkungsbandes wird vorzugsweise ein solches verwendet, das sich, ggf. unter Verwendung von Haftvermittlern, gut mit dem Innen- und Außenschlauch verbinden läßt, um auf diese Weise das Verstärkungsband im Schlauch zu fixieren und einen guten Verbund zwischen Innen- und Außenschlauch zu erhalten. Der Innenschlauch wird mit Vorteil vor dem Umwickeln mit dem ummantelten Verstärkungsband mit einem vorzugsweise elastischen Kleber beschichtet. Dies ist besonders dann der Fall, wenn als Innenschlauch gemäß einer bevorzugten Ausführungsform der Erfindung ein Elastomerschlauch, insbesondere ein Gummischlauch verwendet wird. Der Innenschlauch kann in gedehntem Zustand, vorzugsweise um etwa 5 bis 20%, mit dem Verstärkungsband umwickelt werden. Dadurch kann mit einer verhältnismäßig großen Ganghöhe gewickelt werden, die sich beim Rückfedern entsprechend verringert. Auf diese Weise ist es möglich, die einzelnen Windungen dicht aneinander zu legen, wobei sie sogar durch eine Vorspannung aneinander gezogen sein können.

Werden zur Axialverstärkung axiale Verstärkungsfäden mit dem Innenschlauch verbunden, dann erfolgt dies vorzugsweise bei gedehntem Innenschlauch, wobei die Dehnung 5 bis 100%, insbesondere 10 bis 20%, betragen kann. Die axialen Verstärkungsfäden werden bei einer Ausführungsform mindestens stellenweise mit dem Innenschlauch verklebt. Insbesondere dann, wenn der Innenschlauch ein Schlauch aus elastomerem Material ist, kann es von Vorteil sein, den Innenschlauch zur radialen Stabilisierung und zur Verbesserung der Verbindung mit der Verstärkungswendel und ggf. dem Außenschlauch mit einem Mantel aus thermoplastischem Material zu umspritzen, das vorzugsweise elastische Eigenschaften hat, und die Bewegungen des Gummischlauches mitmachen kann. Vor dem Umspritzen kann der Innenschlauch mit einem Haftvermittler, z. B. einem Kleber beschichtet werden. Das Umspritzen des Innenschlauches mit dem weichgemachten thermoplastischen Kunststoff wird vorzugsweise in ungedehntem Zustand des Innenschlauches vorgenommen. Beim Umspritzen des mit der Verstärkungswendel versehenen Innenschlauches mit dem Material des Außenschlauches kann dieser mehr oder weniger stark gedehnt werden, wodurch die Eigenschaften des Schlauches variiert werden können. Weiterhin ist es möglich, die Form des Zwischenraumes zwischen den einzelnen Gängen der Verstärkungswendel dadurch zu beeinflussen, daß während des Umspritzens mit dem Material des Außenschlauches unterschiedliche Druckverhältnisse im Bereich des Spritzkopfes aufgebaut werden. So kann durch einen von außen angelegten Überdruck erreicht werden, daß das noch weiche Plastikmaterial zwischen die Gänge der Wendel mindestens teilweise radial nach innen gedrückt wird.

Bei einer bevorzugten Ausführungsform der Erfindung ist die zum Außenschlauch weisende Seite der Ummantelung profiliert, vorzugsweise mit Längsrippen entlang der Ränder versehen. Dadurch beschränkt sich die Verbindungsfläche zwischen Außenschlauch und Ummantelung auf die Profiloberseite. Dadurch wird die Flexibilität des Schlauches erhöht, weil der Außenschlauch auch im Bereich der Verbindungsstelle mit der Ummantelung biegsam und elastisch verformbar bleibt.

Insbesondere bei einem Brauseschlauch sind die Schlauchenden zweckmäßigerweise mit Endhülsen versehen. Dabei wird eine besonders gute Befestigung dieser Hülsen erreicht, wenn die Ganghöhe der Verstärkungswendel im Bereich der Schlauchenden kleiner wird, insbesondere so klein, daß die einzelnen Gänge der Wendel sich berühren.

Der Innenschlauch kann, wenn erwünscht, vor dem Umwickeln mit dem Verstärkungsband, ggf. nach vorheriger Behandlung mit einem Kleber mit einem dünnen Weichplastik umspritzt werden, der vorzugsweise elastische Eigenschaften besitzt. Dadurch kann die Befestigung der Verstärkungswendel auf dem Innenschlauch erleichtert werden. Dieses Umspritzen erfolgt zweckmäßigerweise in weitgehend ungedehntem Zustand des Innenschlauches.

Weitere Merkmale und Vorteile der Erfindung ergeben sich aus der nachfolgenden Beschreibung von bevorzugten Ausführungsformen in Verbindung mit der Zeichnung und den Ansprüchen. In der Zeichnung zeigt

Fig. 1 einen Längsschnitt durch eine Ausführungsform der Erfindung,

Fig. 2 einen Querschnitt durch die Ausführungsform nach Fig. 1,

Fig. 3 einen Querschnitt durch die ummantelte Verstärkungswendel von Fig. 1 in vergrößertem Maßstab und

Fig. 4 einen Querschnitt durch eine andere Ausführungsform der Erfindung.

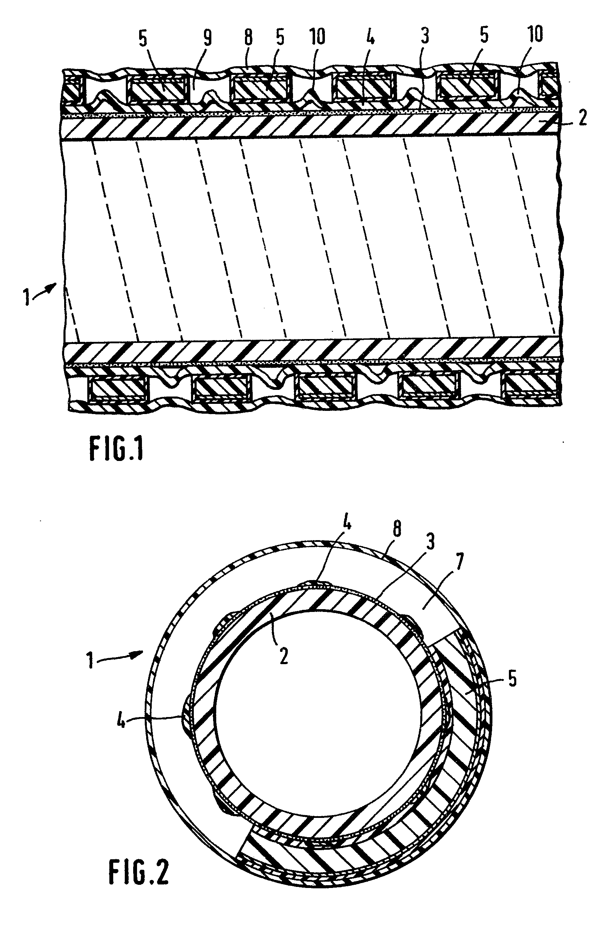

Bei der in der Zeichnung in den Fig. 1 bis 3 dargestellten Ausführungform der Erfindung ist ein doppelwandiger Brauseschlauch 1 vorgesehen, dessen Innenschlauch 2 aus Neopren besteht und der einen Innendurchmesser von ca. 8 mm und eine Wandstärke von ca. 1 mm besitzt. Der Innenschlauch 2 weist an seiner Außenseite eine Schicht 3 aus einem elastomeren Kleber auf, auf den acht im wesentlichen axial verlaufende multifile Verstärkungsfäden 4 flächig aufgelegt sind.

Um den so bewehrten Innenschlauch ist eine Verstärkungswendel 5 gewickelt, die dem Schlauch 2 die notwendige Radialstabilität verleiht. Die Verstärkungswendel 5 besteht aus Hart-PVC, hat einen rechteckig bis ovalen Querschnitt, eine Dicke von ca. 0,5 bis 1 mm und eine Breite von ca. 3 bis 4 mm. Die Verstärkungswendel 5 ist an ihrer Außenseite mit einer dünnen Metallfolie oder metallbedampften Kunststoff-Folie 6, z. B. einer Polyesterfolie belegt, die ihr das gewünschte metallische Aussehen verleiht. Die Verstärkungswendel 5 ist mitsamt der metallisierten Folie schlauchartig mit einer 0,1 bis 0,4 mm starken Schicht aus Weich-PVC umspritzt, die die Verstärkungswendel dicht umschließt, jedoch nicht an ihr haftet. In dieser Ummantelung 7 ist die Verstärkungswendel 5 bei Einwirkung von Kräften verschieblich, insbesondere dann, wenn die Ummantelung bei Biegung des Schlauches 1 quergedehnt wird.

Die ummantelte Verstärkungswendel 5 dient als Verbindungselement für die Verbindung zwischen dem Innenschlauch 2 und einem extrudierten Außenschlauch 8 aus Weich-PVC, wobei die flächige haftende Verbindung zwischen der Ummantelung 7 und dem Innenschlauch 2 über die Kleberschicht 3 erfolgt, wogegen die Ummantelung 7 mit dem Außenschlauch 8 verschweißt ist. Die Steigung der Verstärkungswendel 5 entspricht etwa dem 1 1/2fachen bis 1 3/4fachen der Breite der Verstärkungswendel 5, so daß der Zwischenraum 9 zwischen zwei Gängen der Verstärkungswendel kleiner ist als die Breite der Verstärkungswendel 5. In diesen Zwischenraum ist der Außenschlauch 8 unter Ausbildung einer entsprechenden Verjüngung etwas eingezogen. Im übrigen ist der Zwischenraum, abgesehen von radial nach außen ragenden Noppen 10 der axialen Verstärkungsfäden 4, hohl und frei von zusätzlichen Füll- bzw. Verstärkungselementen.

Die axialen Verstärkungsfäden 4 sind um ca. 10% länger als der Gummischlauch 2 in entspanntem Zustand und verlaufen auf dem Schlauch 2 leicht schlangenlinienförmig bzw. zickzackförmig und/oder bilden die in den Hohlraum 9 ragenden abstehenden Noppen 10 und ermöglichen somit eine definierte Dehnung des Schlauches 1, wobei sie sich bei der Dehnung strecken und diese dann begrenzen. Durch diese Ausbildung ist eine hohe Flexibilität des gesamten Brauseschlauches gegeben, die durch die balgartigen Verjüngungen des Außenschlauches an den Zwischenräumen 9 zwischen den Gängen der Verstärkungswendel 5 noch unterstützt wird. Trotz des geringen Verhältnisses von Ganghöhe zur Breite der Verstärkungswendel 5, d. h. trotz der schmalen Zwischenräume zwischen den Gängen der Wendel sind somit exakt kreisförmige Biegungen des Schlauches 1 mit dem Radius von 30 mm und kleiner möglich.

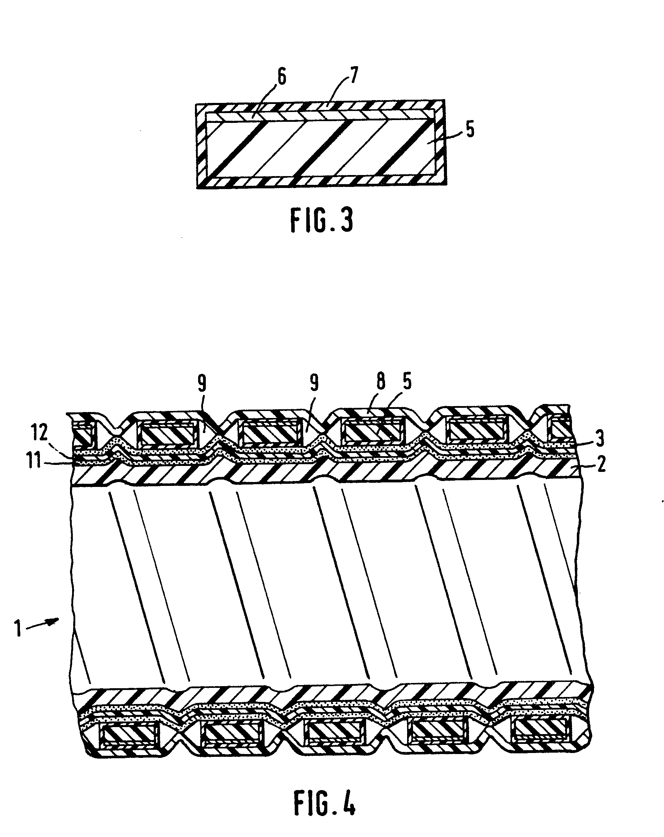

Bei der in Fig. 4 dargestellten Ausführungsform der Erfindung sind die gleichen Teile wie bei der vorhergehend beschriebenen Ausführungsform mit den gleichen Bezugszeichen versehen. Bei dieser Ausführungsform ist der ebenfalls aus Neopren bestehende Gummiinnenschlauch 2 auf seiner Außenseite noch mit einer zusätzlichen Ummantelung versehen. Diese zusätzliche Ummantelung besteht in einer vollflächig aufgebrachten Kleberschicht 11 aus einem elastomeren Kleber, und einer dünnen auf den mit Kleberschicht versehenen Gummischlauch extrudierten Schicht 12 aus Weich-PVC für die der Kleber 11 als Haftvermittler dient, und die eine Wandstärke von ca. 0,1 bis 0,5 mm hat. Da diese weiche Zwischenschicht 12 vollflächig am Gummischlauch 2 anliegt, wird mit Hilfe der Kleberschicht 11 eine gute Verbindung erzielt, die sich auch nach vielen Biege- und Streckvorgängen nicht löst. Auf der Außenseite der Weich-PVC-Zwischenschicht 12 ist wiederum wie bei der vorhergehenden Ausführungsform eine Kleberschicht 3 vorgesehen, die dazu dient, eine innige Verbindung zwischen der Ummantelung 7 der Verstärkungswendel 5 und der Weich-PVC-Zwischenschicht 12 zu erzielen. Da sowohl die Ummantelung 7 als auch die Zwischenschicht 12 aus Weich-PVC bestehen, kann auch auf die Kleberschicht 3 verzichtet werden, wobei dann die Verbindung zwischen Ummantelung 7 und PVC-Zwischenschicht 12 durch Verschweißung bzw. Lösungsmittelverklebung erfolgen kann.

Die Ausführungsform nach Fig. 4 unterscheidet sich aber noch in einem weiteren Merkmal von der Ausführungsform nach Fig. 1. Wie aus Fig. 4 zu ersehen ist, sind die Abschnitte des Gummischlauches 2 mit der darauf befindlichen Weich-PVC-Zwischenschicht 12, die die Zwischenräume 9 der Verstärkungswendel 5 überbrücken, radial nach außen ausgebaucht. Auf der anderen Seite ist der Außenschlauch 8 unter Ausbildung entsprechender wellenförmiger Verjüngungen so weit in die Hohlräume 9 zwischen den Gängen der Verstärkungswendel 5 eingezogen, daß er den Innenschlauch 2 mit der darauf befindlichen Weich-PVC-Zwischenschicht 12 berührt und mit dieser bleibend verbunden ist. Dadurch wird im Innen- und Außenschlauch eine gegenläufige Wellstruktur erhalten, die eine hervorragende Flexibilität und Biegefähigkeit des Schlauches gewährleistet. Falls erwünscht, können auch bei dieser Ausführungsform axiale Verstärkungsfäden vorgesehen sein.

Die Erfindung ist nicht auf die beschriebenen Ausführungsformen beschränkt. Es sind vielmehr Abwandlungen hiervon möglich, ohne daß der Rahmen der Erfindung verlassen wird. So kann der lichte Abstand zwischen den einzelnen Gängen der Verstärkungswendel so groß gehalten werden, daß eine flächige Verbindung des Außenschlauches mit dem glatten Innenschlauch unter Ausbildung eines im Längsschnitt mäanderförmigen Verlaufes des Außenschlauches erzielt wird. Dies ist möglich, wenn beim Umspritzen des mit der Wendel verstärkten Innenschlauches mit dem Material des Außenschlauches ein ausreichend starker Druck angelegt wird, der den Außenschlauch eng an die Wendel und den Innenschlauch anlegt. Auf der anderen Seite kann eine hervorragende Längselastizität dadurch erzielt werden, daß der Innenschlauch 2 mit geringer Ganghöhe mit der ummantelten Verstärkungswendel 5 umwickelt wird, so daß die Zwischenräume zwischen den einzelnen Gängen beim entspannten Gummischlauch nur etwa der Hälfte oder weniger der Breite der Verstärkungswendel entsprechen. Das Aufbringen des Außenschlauches kann dann bei gedehntem Innenschlauch unter mäßigem Druck erfolgen, wobei sich der Außenschlauch dann beim Entspannen balgartig im Querschnitt V-förmig nach innen legt. Wird der Schlauch dann gestreckt, dann wird der Außenschlauch an den balgartig verjüngten Stellen wieder glattgezogen, ohne daß eine wesentliche Dehnung des Außenschlauches erforderlich ist. Der gleiche Vorgang spielt sich auch beim Biegen des Schlauches an der Außenseite der Biegung ab. Es ist weiterhin auch möglich, den Innenschlauch aus einem thermoplastischen Kunststoff anstelle von Gummi zu fertigen, wobei auf eine besondere Kleberbeschichtung der Außenseite des Innenschlauches verzichtet werden kann, wenn der Innenschlauch ebenfalls aus Weichplastik, z. B. weichgemachtem PVC besteht. In diesem Falle reicht beispielsweise eine Lösungsmittelverklebung zur Erzielung der gewünschten Haftung zwischen der ummantelten Verstärkungswendel und dem Innenschlauch aus. Allerdings ist ein Brauseschlauch mit einem Innenschlauch aus Weich-PVC weniger beständig gegen heißes Wasser als ein entsprechender Schlauch mit einem Innenschlauch aus Gummi.

**Patentansprüche**

1. Flexibler bewehrter Kunststoffschlauch (1), insbesondere Brauseschlauch, mit einem extrudierten Innenschlauch (2) aus thermoplastischem oder elastomerem Material, einem extrudierten Außenschlauch (8) aus thermoplastischem oder elastomerem Material, der mindestens teilweise im Abstand vom Innenschlauch (2) gehalten ist, und einer zur Bewehrung dienenden ummantelten Verstärkungswendel (5), zwischen Innen- und Außenschlauch, derem Ummantelung (7) mit dem Innenschlauch (2) verbunden ist, dadurch gekennzeichnet, daß die Ummantelung (7) als an der Verstärkungswendel (5) nicht haftender Schlauch ausgebildet ist, in dem die Verstärkungswendel (5) verschieblich liegt, und die Ummantelung (7) auch mit dem Außenschlauch (8) verbunden ist.

2. Schlauch nach Anspruch 1, dadurch gekennzeichnet, daß die Ummantelung (7) der Verstärkungswendel (5) aus einem mindestens teilweise elastisch verformbaren Material, insbesondere Weich-Polyvinylchlorid besteht.

3. Schlauch nach Anspruch 1 oder 2, dadurch gekennzeichnet, daß der Zwischenraum (9) zwischen den Gängen der Verstärkungswendel (5) frei von zusätzlichen Verstärkungselementen ist.

4. Schlauch nach einem der vorhergehenden Ansprüche, dadurch gekennzeichnet, daß sich der Außenschlauch (8) und der Innenschlauch (2) im Zwischenbereich zwischen den Gängen der Verstärkungswendel (5) berühren, insbesondere bleibend miteinander verbunden sind.

5. Schlauch nach einem der vorhergehenden Ansprüche, dadurch gekennzeichnet, daß der Innenschlauch (2) aus Gummi, vorzugsweise aus heißwasserbeständigem Gummi, besteht.

6. Schlauch nach einem der vorhergehenden Ansprüche, dadurch gekennzeichnet, daß die Ummantelung (7) der Verstärkungswendel (5) an ihrer zum Außenschlauch (8) weisenden Seite profiliert ist, vorzugsweise entlang der Randkanten verlaufende rippenförmige Erhöhungen aufweist.

7. Schlauch nach einem der vorhergehenden Ansprüche, dadurch gekennzeichnet, daß die Ummantelung (7) der Verstärkungswendel (5) mit dem Innenschlauch (2) bzw. dem Außenschlauch (8) verklebt oder verschweißt ist.

8. Schlauch nach einem der vorhergehenden Ansprüche, dadurch gekennzeichnet, daß zwischen Außenseite des Innenschlauches (2) und ummantelter Verstärkungswendel (5) ein Haftvermittler (3) vorgesehen ist.

9. Schlauch nach Anspruch 8, dadurch gekennzeichnet, daß der Haftvermittler von einem Überzug (3, 11) aus einem elastischen Kleber und/oder einer Ummantelung (12) des Innenschlauches gebildet wird, die aus Weichplastik besteht.

10. Schlauch nach einem der vorhergehenden Ansprüche, dadurch gekennzeichnet, daß der Innenschlauch (2) mit im wesentlichen axial verlaufenden, flexiblen, aber nicht dehnbaren Verstärkungsfäden (4) belegt ist, die auf der Außenfläche des Innenschlauches (2) aufliegen, vorzugsweise mindestens teilweise mit dieser verbunden sind.

11. Schlauch nach Anspruch 10, dadurch gekennzeichnet, daß die axialen Verstärkungsfäden (4) länger sind als der Innenschlauch (2) in entspanntem Zustand.

12. Schlauch nach Anspruch 10 oder 11, dadurch gekennzeichnet, daß die axialen Verstärkungsfäden (4) im Bereich zwischen den Gängen der ummantelten Verstärkungswendel (5) noppenförmige Dehnungsschlaufen (10) aufweisen.

13. Schlauch nach einem der vorhergehenden Ansprüche, insbesondere nach einem der Ansprüche 6 bis 12, dadurch gekennzeichnet, daß er eine Längselastizität von 5 bis 100%, insbesondere 10 bis 20%, besitzt, die vorzugsweise durch axiale Verstärkungsfäden (4) begrenzt ist.

14. Schlauch nach einem der vorhergehenden Ansprüche mit Endhülsen an den Schlauchenden, dadurch gekennzeichnet, daß die Ganghöhe der ummantelten Verstärkungswendel (5) im Bereich der Endhülsen zunehmend kleiner ist, vorzugsweise so klein ist, daß die Gänge der Verstärkungswendel dicht an dicht liegen.

15. Verfahren zur Herstellung des Schlauches (1) nach einem der vorhergehenden Ansprüche, bei dem der Innenschlauch (2) mit einem monofilen, ggf. mit einer Metallisierung (6) versehenen ummantelten Verstärkungsband wendelförmig umwickelt und die Ummantelung (7) mit dem Innenschlauch (2) verbunden wird und ein Außenschlauch (8) über die gebildete Verstärkungswendel (5) extrudiert wird, dadurch gekennzeichnet, daß zur Herstellung des ummantelten Verstärkungsbandes ein biegbares Verstärkungsband aus Hartplastik mit einem weichen thermoplastischen Künststoff unter Vermeidung einer Haftverbindung durch Umspritzen so ummantelt wird, daß das Verstärkungsband in der Ummantelung verschieblich bleibt, und daß die Ummantelung (7) der Verstärkungswendel (5) auch mit dem Außenschlauch (8) verbunden wird.

16. Verfahren nach Anspruch 15, dadurch gekennzeichnet, daß der elastische Innenschlauch (2) in gedehntem Zustand, vorzugsweise in um 5 bis 20% gedehntem Zustand, mit dem Verstärkungsband umwickelt wird.

17. Verfahren nach einem der Ansprüche 15 oder 16, dadurch gekennzeichnet, daß der elastische Innenschlauch (2) in gedehntem Zustand mit axialen Verstärkungsfäden (4) belegt wird, wobei die Dehnung 5 bis 100%, vorzugsweise 10 bis 20%, beträgt.

18. Verfahren nach einem der Ansprüche 15 bis 17, dadurch gekennzeichnet, daß der mit der Verstärkungswendel versehene Innenschlauch in gedehntem Zustand mit dem Außenschlauch ummantelt wird.

## Claims

1. Flexible reinforced plastic hose (1), particularly a shower hose, with an extruded inner hose (2) made from a thermoplastic or elastomeric material, an extruded outer hose (8) made from a thermoplastic or elastomeric material, which is kept at least partly spaced from the inner hose (2), and a covered reinforcing coil (5) serving a reinforcement function between the inner and outer hose, whose covering (7) is connected to the inner hose (2), characterized in that the covering (7) is constructed as a hose not adhering to the reinforcing coil (5) and in which the latter is displaceably arranged, whilst the covering (7) is also connected to the outer hose (8).

2. Hose according to claim 1, characterized in that the covering (7) of the reinforcing coil (5) is made from an at least partly elastically deformable material, particularly flexible polyvinyl chloride.

3. Hose according to claims 1 or 2, characterized in that the space (9) between the turns of the reinforcing coil (5) is free from additional reinforcing elements.

4. Hose according to one of the preceding claims, characterized in that in the area between the turns of the reinforcing coil (5), outer hose (8) and inner hose (2) are in contact with one another and are in particular permanently connected.

5. Hose according to one of the preceding claims, characterized in that the inner hose (2) is made from rubber, particularly rubber which is resistant to hot water.

6. Hose according to one of the preceding claims, characterized in that the covering (7) of the reinforcing coil (5) is profiled on its side directed towards the outer hose (8) and preferably has rib-like projections along the lateral edges.

7. Hose according to one of the preceding claims, characterized in that the covering (7) of the reinforcing coil (5) is bonded or welded to the inner hose (2) and/or the outer hose (8).

8. Hose according to one of the preceding claims, characterized in that a bonding agent (3) is provided on the outside of the inner hose (2) and the covered reinforcing coil (5).

9. Hose according to claim 8, characterized in that the bonding agent is formed from a coating (3, 11) of an elastic adhesive and/or a covering (12) of the inner hose and which is made from flexible plastic.

10. Hose according to one of the preceding claims, characterized in that the inner hose (2) is lined with substantially axially directed, flexible, but non-extensible reinforcing threads (4), which are placed on the outer surface of inner hose (2) and are preferably at least partly joined thereto.

11. Hose according to claim 10, characterized in that the axial reinforcing threads (4) are longer than the inner hose (2) in the slackened state.

12. Hose according to claims 10 or 11, characterized in that in the area between the turns of the covered reinforcing coil (5), the axial reinforcing threads (4) have protuberance-like expansion loops (10).

13. Hose according to one of the preceding claims, particularly according to one of the claims 6 to 12, characterized in that it has a longitudinal elasticity of 5 to 100%, particularly 10 to 20%, which is preferably defined by axial reinforcing threads (4).

14. Hose according to one of the preceding claims with end sleeves on the hose end, characterized in that the pitch of the covered reinforcing coil (5) in the vicinity of the end sleeves becomes progressively smaller, being preferably so small that the turns of the reinforcing coil are closely juxtaposed.

15. Method for the manufacture of the hose (1) according to one of the preceding claims, in which a monofilament reinforcing strip optionally covered with a metal coating (6) is wound around the inner hose (2) and covering (7) is connected to inner hose (2), whilst an outer hose (8) is extruded over the reinforcing coil (5) formed, characterized in that for producing the covered reinforcing strip a bendable reinforcing strip made from rigid plastic covered by extrusion with a flexible thermoplastic material whilst avoiding a bonded joint in such a way that the reinforcing strip remains displaceable in the covering, and that the covering (7) of the reinforcing coil (5) is also connected with the outer hose (8).

16. Method according to claim 15, characterized in that the reinforcing strip is wound round the elastic inner hose (2) in the expanded state, preferably in the 5 to 20% expanded state.

17. Method according to one of the claims 15 or 16, characterized in that in the expanded state, the elastic inner hose (2) is lined with axial reinforcing threads (4), the expansion being 5 to 100% and preferably 10 to 20%.

18. Method according to one of the claims 15 to 17, characterized in that the inner hose provided with the reinforcing coil is covered by the outer hose in the expanded state.

## Revendications

1. Tuyau (1) en matière plastique flexible et renforcé, en particulier tuyau flexible pour douche, comprenant un tuyau intérieur (2) obtenu par extrusion de matière thermoplastique ou élastomère, un tuyau extérieur (8) obtenu par extrusion de matière thermoplastique ou élastomère et qui est maintenu au moins partiellement à une certaine distance du tuyau intérieur (2), et un élément renforçateur hélicoïdal revêtu (5) qui, servant d'armature et disposé entre le tuyau intérieur et le tuyau extérieur, a son revêtement (7) relié au tuyau intérieur (2), caractérisé en ce que le revêtement (7) est réalisé sous la forme d'une gaine n'adhérant pas à l'élément renforçateur hélicoïdal (5) et à l'intérieur de laquelle l'élément renforçateur hélicoïdal (5) est disposé de façon à pouvoir coulisser, et en ce que le revêtement (7) est également relié au tuyau extérieur (8).

2. Tuyau selon la revendication 1, caractérisé en ce que le revêtement (7) de l'élément renforçateur hélicoïdal (5) est en une matière au moins en partie élastiquement déformable, en particulier du polychlorure de vinyle plastifié.

3. Tuyau selon la revendication 1 ou 2, caractérisé en ce que l'intervalle (9) entre les spires de l'élément renforçateur hélicoïdal (5) est exempt d'éléments renforçateurs additionnels.

4. Tuyau selon l'une quelconque des revendications précédentes, caractérisé en ce que le tuyau extérieur (8) et le tuyau intérieur (2) se touchent dans la zone intermédiaire située entre les spires de l'élément renforçateur hélicoïdal (5), et sont de préférence reliés définitivement l'un à l'autre.

5. Tuyau selon l'une quelconque des revendications précédentes, caractérisé en ce que le tuyau intérieur (2) est en caoutchouc, de préférence en caoutchouc résistant à l'eau chaude.

6. Tuyau selon l'une quelconque des revendications précédentes, caractérisé en ce que le revêtement (7) de l'élément renforçateur hélicoïdal (5) est profilé du côté situé en regard du tuyau extérieur (8) et présente de préférence des élévations en forme de nervures s'étendant le long des arêtes marginales.

7. Tuyau selon l'une quelconque des revendications précédentes, caractérisé en ce que le revêtement (7) de l'élément renforçateur hélicoïdal (5) est relié par collage ou soudage au tuyau intérieur (2) et/ou au tuyau extérieur (8).

8. Tuyau selon l'une quelconque des revendications précédentes, caractérisé en ce qu'un adhésif intermédiaire (3) est prévu entre le côté extérieur du tuyau intérieur (2) et l'élément renforçateur hélicoïdal revêtu (5).

9. Tuyau selon la revendication 8, caractérisé en ce que l'adhésif intermédiaire est formé par une couche (3, 11) d'une colle élastique et/ou par un revêtement (12) du tuyau intérieur, lequel revêtement est en une matière plastique souple.

10. Tuyau selon l'une quelconque des revendications précédentes, caractérisé en ce que sur le tuyau intérieur (2) sont disposés des fils renforçateurs flexibles mais non extensibles (4) s'étendant sensiblement en direction axiale et qui prennent appui sur la face extérieure du tuyau intérieur (2) et sont, de préférence, au moins partiellement reliés à celle-ci.

11. Tuyau selon la revendication 10, caractérisé en ce que les fils renforçateurs axiaux (4) sont plus longs que le tuyau intérieur (2) se trouvant à l'état relâché.

12. Tuyau selon la revendication 10 ou 11, caractérisé en ce que les fils renforçateurs axiaux (4) présentent dans la zone située entre les spires de l'élément renforçateur hélicoïdal revêtu (5) des boucles d'allongement (10) en forme de saillies.

13. Tuyau selon l'une quelconque des revendications précédentes, notamment selon l'une des revendications 6 à 12, caractérisé en ce qu'il présente une élasticité longitudinale de 5 à 100%, en particulier de 10 à 20%, laquelle est de préférence limitée par des fils renforçateurs axiaux (4).

14. Tuyau selon l'une quelconque des revendications précédentes, comportant des douilles terminales aux extrémités du tuyau, caractérisé en ce que le pas de l'élément renforçateur hélicoïdal revêtu (5) va en diminuant au niveau des douilles terminales et devient de préférence suffisamment petit pour que les spires de l'élément renforçateur hélicoïdal soient disposées de manière jointive.

15. Procédé destiné à la fabrication du tuyau (1) selon l'une quelconque des revendications précédentes et dans lequel un ruban renforçateur monofilaire revêtu et éventuellement muni d'une métallisation (6) est enroulé hélicoïdalement autour du tuyau intérieur (2) et le revêtement (7) est relié au tuyau intérieur (2) et un tuyau extérieur (8) est formé par extrusion pardessus l'élément renforçateur hélicoïdal (5) ainsi formé, caractérisé en ce que pour la fabrication du ruban renforçateur revêtu, un ruban renforçateur flexible en matière plastique rigide est revêtu par extrusion autour de celui-ci d'une matière synthétique thermoplastique souple, en évitant une liaison par adhérence, de telle manière que le ruban renforçateur reste susceptible de coulisser dans le revêtement, et en ce que le revêtement (7) de l'élément renforçateur hélicoïdal (5) est également relié au tuyau extérieur (8).

16. Procédé selon la revendication 15, caractérisé en ce que c'est autour du tuyau intérieur élastique (2) à l'état allongé, de préférence dans un état allongé de 5 à 20%, que le ruban renforçateur est enroulé.

17. Procédé selon l'une des revendications 15 ou 16, caractérisé en ce que c'est à l'état allongé que le tuyau intérieur élastique (2) est muni de fils renforçateurs axiaux (4), l'allongement étant de 5 à 100% et de préférence de 10 à 20%.

18. Procédé selon l'une quelconque des revendications 15 à 17, caractérisé en ce que c'est à l'état allongé que le tuyau intérieur muni de l'élément renforçateur hélicoïdal est recouvert du tuyau extérieur.

5   9   8   5   10   4   3   5   10

2

1

**FIG.1**

4   8   3   7

1

2

4

5

**FIG.2**

FIG. 3

FIG. 4